# EUROPEAN PATENT SPECIFICATION

(11) **EP 4 282 722 B1**
(45) Date of publication and mention of the grant of the patent: **17.12.2025**
(21) Application number: 22175130.8
(22) Date of filing: 24.05.2022
(51) Int. Cl.: B60T 17/08, F16D 125/08

(54) **PISTON BOOT FOR A BRAKE ACTUATOR, BRAKE ACTUATOR COMPRISING A RESPECTIVE PISTON BOOT AND A DISC BRAKE**
KOLBENMANSCHETTE FÜR EINE BREMSBETÄTIGUNGSVORRICHTUNG, BREMSBETÄTIGUNGSVORRICHTUNG, DIE EINE JEWEILIGE KOLBENMANSCHETTE UMFASST UND EINE BREMSSCHEIBE
GAINE DE PISTON POUR UN ACTIONNEUR DE FREIN, ACTIONNEUR DE FREIN COMPRENANT UNE GAINE DE PISTON RESPECTIVE ET UN FREIN À DISQUE

(43) Date of publication of application: 29.11.2023
(73) Proprietor: ZF CV Systems Europe BV, 1170 Brüssel (BE)
(72) Inventor: STRZALA, Wieslaw, 46-220 Byczyna (PL)
(74) Representative: Ohlendorf, Henrike

(56) References cited:
- WO-A1-2010/009884
- CN-A- 107 228 140
- DE-A1- 102012 006 090

## Description

The invention relates to a piston boot for a brake actuator, a brake actuator comprising a respective piston boot and a disc brake with such a brake actuator.

Brake actuators are widely used in compressed air brake systems of vehicles, for example of commercial vehicles like heavy trucks, buses, and trailers. Such a brake actuator is operated using compressed air provided by a compressed-air supply container, which is filled by a compressor. The brake actuator comprises a housing, in which a pressure chamber and a diaphragm are provided, via which a push rod is shifted to operate a disc brake or a drum brake of a vehicle when the pressure chamber is filled with compressed air during a braking action being initiated by a driver of a vehicle.

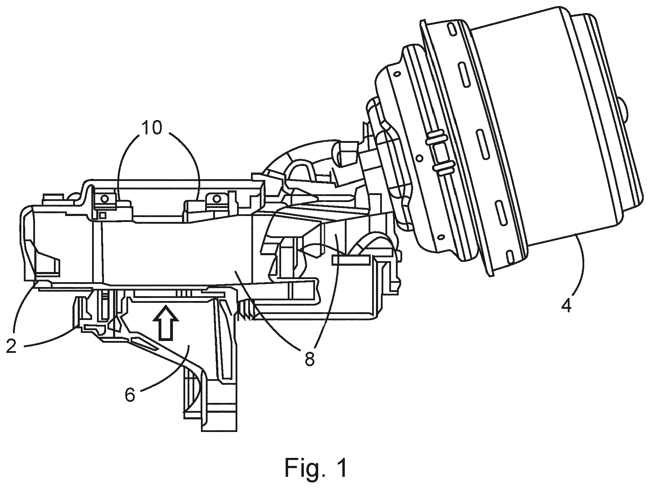

A disc brake 2 together with a spring brake actuator 4 of an air brake system according to prior art is depicted in Fig. 1. The disc brake 2 comprises as essential parts a brake anchor plate 6, a caliper 8 with a clamping unit, and brake pads 10, which are arranged in an axially movable manner on the brake anchor plate 6. The caliper 8 is arranged on guide pins of the brake anchor plate 6, which allows for an axial movement of the caliper 8 relative to the brake anchor plate 6 in case of a braking action. The spring brake actuator 4 is mounted on the disc brake 2 and is operated using compressed air.

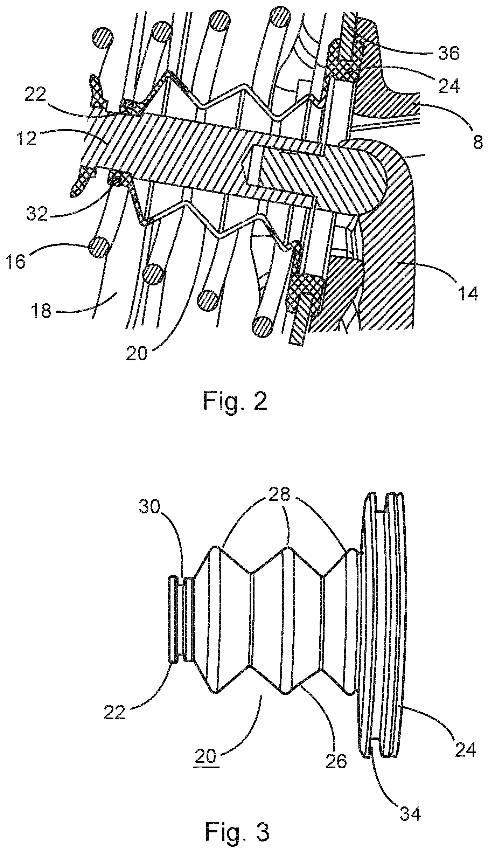

Fig. 2 shows main parts of the disc brake 2 and the spring brake actuator 4 in a cross section, when the spring brake actuator 4 is in a released state. The spring brake actuator 4 comprises a push rod 12, which provides via a lever 14 of the disc brake 2 an axial movement of a yoke of the caliper 8, via which the brake pads 10 are pushed against a brake rotor, not shown in Figs. 1 and 2, which brake rotor is mounted onto an axle of the vehicle, to create friction. The lever 14 is coupled with the push rod 12 of the spring brake actuator 4, which push rod 12 is shifted in case of a braking action by a diaphragm of the spring brake actuator 4 in the direction of the lever 14. The spring brake actuator 4 further comprises a service brake spring 16 disposed in a service spring chamber 18, which service brake spring 16 pushes the diaphragm and the push rod 12 back, when the spring brake actuator 4 is released. The spring brake actuator 4 in addition comprises a bellows-like piston boot 20, which encases a middle part of the push rod 12 to seal an interior of the disk brake 2 against an outer environment.

The piston boot 20 is typically manufactured from a rubber material and comprises a first end 22, a second end 24, and a middle section 26, wherein the piston boot 20 has a form of a hollow, substantially cylindrical body, as depicted in Fig. 3 in a side view. The middle section 26 comprises a set of folding elements 28 and is compressible like a bellows. The ends 22 and 24 each have a form of a ring. The first end 22 comprises a groove 30 at its outer circumference, in which a clamping element 32, for example a metal ring, see Fig. 2, is mounted for fixing the first end 22 at the push rod 12, and the second end 24 comprises a groove 34 at its outer circumference, via which the second end 24 is fixed at a housing cover 36, see Fig. 2, of the spring brake actuator 4. The clamping element 32 keeps the first end 22 from moving on the push rod 12 during a braking action. The ends 22 and 24 have a tight fit, so that the piston boot 20 is compressed during a braking action of the spring brake actuator 4 and is stretched, when the spring brake actuator 4 releases the disc brake 2.

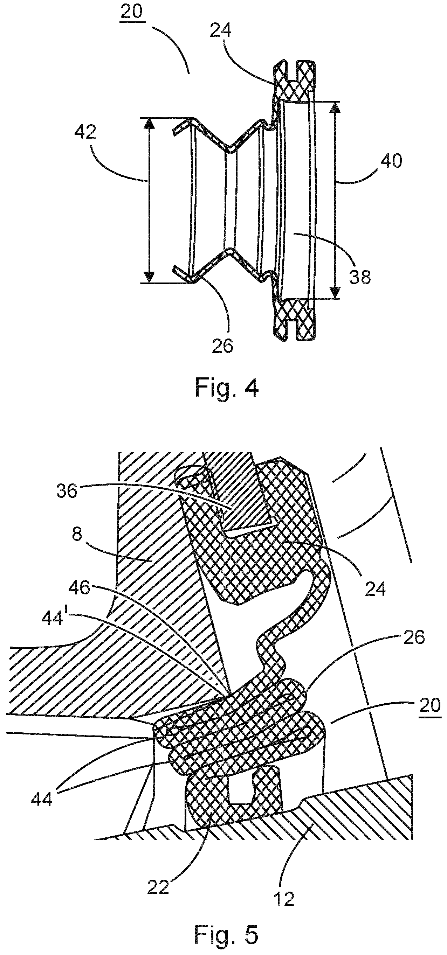

The second end 24 and a part of the middle section 26 of the piston boot 20 is shown in Fig. 4 in a cross section. The second end 24 comprises an opening 38 having a diameter 40 that is larger than an outer diameter 42 of the middle section 26.

In some applications, when a compact size of the spring brake actuator 4 is preferred, a part 44 of the middle section 26 of the piston boot 20 enters partially into the caliper 8 when the spring brake actuator 4 is fully applied, as shown in Fig. 5. In such a case, a part 44' of the middle section 26 gets in contact with a sharp machined edge 46 of the caliper 8. A multitude of sharp braking actions can, therefore, damage the middle section 26 of the piston boot 20, which leads to a loss of the sealing function of the piston boot 20.

DE 44 247 21 A1 discloses a spring brake actuator comprising a piston boot according to the preamble of claim 1. DE 10 2012 006 090 A1 discloses a brake chamber comprising a piston boot according to the preamble of claim 1.

The CN107228140A discloses a spring brake actuator with a bellows with two ends, the second end having a groove for mounting the bellows to the brake cylinder housing.

It is an object of the present invention to provide a piston boot for a brake actuator, a brake actuator comprising a respective piston boot and a disc brake with such a brake actuator, which have an improved reliability and lifetime.

The invention is as set out in the independent claim 1. Preferred embodiments are defined by the dependent claims.

The piston boot comprises a first end, a second end, and a compressible middle section, wherein the piston boot has a form of a hollow, substantially cylindrical body. The second end comprises an opening and a groove at its outer circumference for mounting the second end at a housing cover of a brake actuator, wherein the second end further comprises a lip extending into the opening of the second end.

In a preferred embodiment relating to a disc brake, the lip has a size that is sufficient to separate a caliper of the disc brake from the middle section of the piston boot in case of a braking action of the brake actuator, wherein in the braking action a service brake spring of the brake actuator is fully compressed.

In another preferred embodiment relating to a disc brake, the lip has a size that is sufficient to prevent a contact between the middle section and an edge of the caliper during the braking action, in which the service brake spring is fully compressed.

In another preferred embodiment relating to a disc brake, an end of the lip covers an edge of the caliper during the braking action, in which the service brake spring is fully compressed.

In a preferred embodiment relating to a piston boot, the lip comprises a central hole having a diameter that is smaller than an outer diameter of the middle section.

In another preferred embodiment, the central hole of the lip has a circular shape, an elliptical shape, or a polygonal shape.

In another preferred embodiment, the lip comprises cuts dividing the lip in two or more sections.

In another preferred embodiment, the lip is manufactured from the same material as the piston boot, for example from a rubber material.

In another preferred embodiment, the lip includes a reinforcement layer, for example a fabric layer moulded within the lip.

Because the lip prevents a contact between the middle section and the edge of the caliper in case of a braking action, in which the service brake spring is fully compressed, the reliability and the lifetime of the piston boot is improved. In another aspect of the invention, a brake actuator comprises a piston boot as defined above.

In a preferred embodiment, the brake actuator comprises a push rod and the piston boot, wherein the push rod has a section, which is surrounded by the piston boot.

The brake actuator is preferably a brake chamber or a spring brake actuator.

Preferred embodiments of the invention are explained in more detail below by way of example with reference to schematic drawings, which show:
- Fig. 1: a disc brake and a spring brake actuator of an air brake system according to prior art;
- Fig. 2: essential parts of the disc brake and the spring brake actuator of Fig. 1 in a cross section;
- Fig. 3: a piston boot of the spring brake actuator of Fig. 1 in a side view;
- Fig. 4: a part of the piston boot of Fig. 3 in a cross section;
- Fig. 5: a detail of the disc brake and the spring brake actuator of Fig. 1, when the spring brake actuator is fully applied, in a cross section;
- Fig. 6: a first preferred embodiment of a piston boot according to the invention;
- Fig. 7: the piston boot of Fig. 6 in a cross section;
- Fig. 8: a detail of a disc brake and a brake actuator comprising the piston boot of Fig. 6, when the brake actuator is fully applied, in a cross section;
- Fig. 9: a second preferred embodiment of a piston boot according to the invention;
- Fig. 10: a third preferred embodiment of a piston boot according to the invention;
- Fig. 11: a fourth preferred embodiment of a piston boot according to the invention; and
- Fig. 12: a part of a fifth preferred embodiment of a piston boot according to the invention.

The present description illustrates the principles of the present invention. It will thus be appreciated that those skilled in the art will be able to devise various arrangements that, although not explicitly described or shown herein, embody the scope of the invention, which is defined in the appended claims.

All examples and conditional language recited herein are intended for instructional purposes to aid the reader in understanding the present invention.

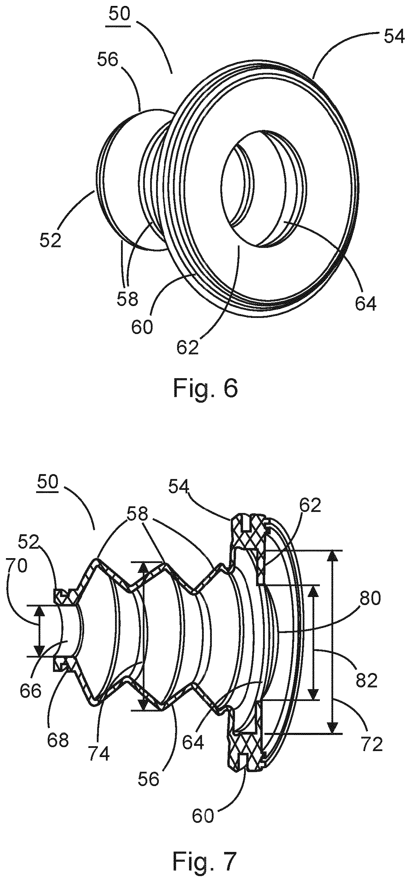

Fig. 6 depicts a piston boot 50 comprising a first end 52, a second end 54, and a middle section 56, wherein the piston boot 50 has a form of a hollow, substantially cylindrical body. The middle section 56 comprises a set of folding elements 58 and is compressible like a bellows. The piston boot 50 is manufactured, for example, from a rubber material, or at least the middle section 56 is manufactured from a rubber material, and is designed particularly for a disc brake.

The first end 52 is designed to provide a tight fit at a push rod of a brake actuator, so that the first end 52 does slip on the push rod during a braking action of the brake actuator, as described with regard to Fig. 2. The second end 54 comprises a groove 60 at its outer circumference, via which the second end 54 can be mounted at a housing cover of the brake actuator. The ends 52 and 54 are designed such that an interior of the disc brake is sealed against an outer environment, in particular during operations of the brake actuator. The second end 54 comprises a lip 62, which extends into an opening 64 of the second end 54. The lip 62 is manufactured, for example, from the same material as the second end 54.

Fig. 7 depicts the piston boot 50 in a cross section. The first end 52 comprises an opening 66 and the second end 54 comprises the opening 64. The first end 52 includes a groove 68 at its outer circumference to fix the first end 52 at the push rod of the brake actuator. The middle section 56 in this embodiment comprises three compressible folding elements 58. The first end 52 has a form of a ringlike element having an inner diameter 70, which corresponds with a diameter of the push rod of the brake actuator. The second end 54 also has a form of a ringlike element having an inner diameter 72 that is larger than an outer diameter 74 of the middle section 56. The lip 62 comprises a central hole 80 having a diameter 82 that is smaller than the outer diameter 74 of the middle section 56.

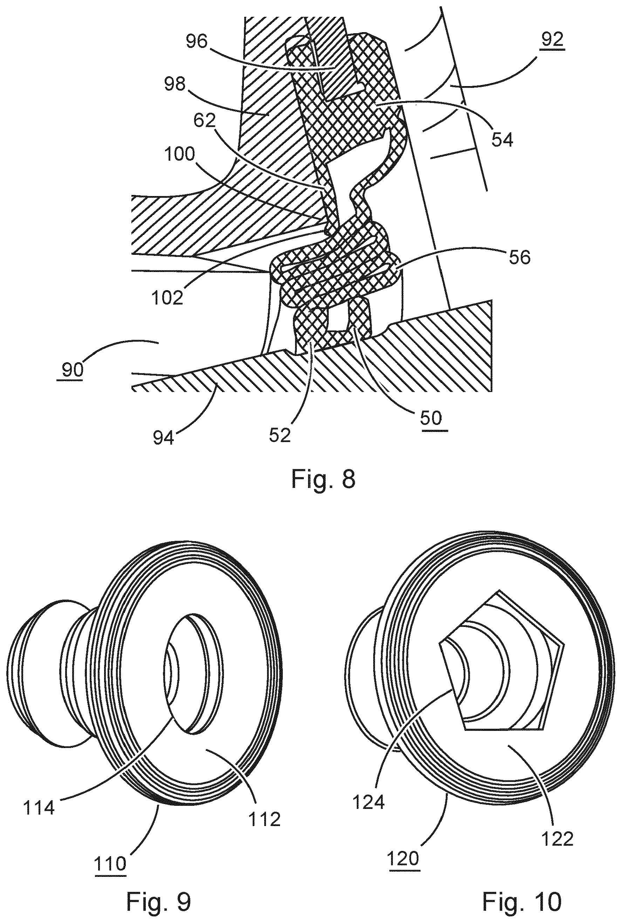

Fig. 8 depicts in a cross section a detail of a disc brake 90 and a brake actuator 92 comprising the piston boot 50, showing a situation when the brake actuator 92 is fully applied. The first end 52 of the piston boot 50 is fixed at a push rod 94 of the brake actuator 92 and the second end 54 of the piston boot 50 is fixed at a housing cover 96 of the brake actuator 92. The middle section 56 of the piston boot 50 is completely compressed in this case. Because of a compact size of the disc brake 90 and the brake actuator 92, the push rod 94 and also a part of the piston boot 50 enter partially into a caliper 98 of the disc brake 90. The second end 54 rests in this situation at the caliper 98 and a sharp edge 100 of the caliper 98 gets in contact with the lip 62. An end 102 of the lip 62 surrounds in particular the edge 100, therefore preventing any contact between the edge 100 and the middle section 56 during the full application of the brake actuator 92. Hence, the middle section 56 of the piston boot 50 cannot be damaged by braking actions of the brake actuator 92.

The central hole 80 of the lip 62 has in a preferred embodiment a circular shape. Fig. 9 depicts a second preferred embodiment of a piston boot 110 comprising a lip 112 with a central hole 114, which has an elliptical shape. Fig. 10 depicts a third preferred embodiment of a piston boot 120 comprising a lip 122 with a central hole 124, which has a polygonal shape.

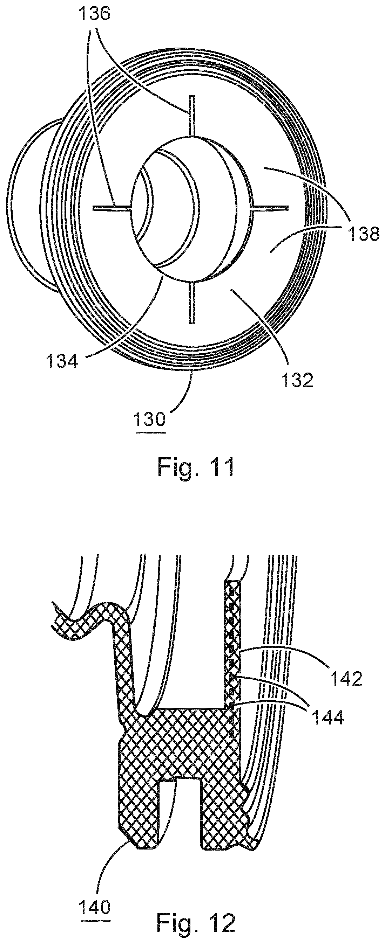

Fig. 11 depicts a fourth preferred embodiment of a piston boot 130, comprising a lip 132 with a central hole 134, wherein the lip 132 includes several cuts, in this embodiment four cuts 136, which divide the lip into sections 138, which allow a more free movement of the lip 132.

Fig. 12 depicts in a cross section a part of a fifth preferred embodiment of a piston boot 140, which comprises a lip 142 including a reinforcement 144. The reinforcement 144 is for example a fabric layer being moulded within the lip 142.

### List of Reference signs (part of the specification):

- 2: disc brake
- 4: spring brake actuator
- 6: brake anchor plate
- 8: caliper
- 10: brake pads
- 12: push rod
- 14: lever
- 16: service brake spring
- 18: service spring chamber
- 20: piston boot
- 22, 24: ends of the piston boot
- 26: middle section of the piston boot
- 28: folding elements
- 30: groove of the first end 22
- 32: clamping element
- 34: groove of the second end 24
- 36: housing cover
- 38: opening of the second end 24
- 40: diameter of the opening 38
- 42: outer diameter of the middle section 26
- 44, 44': parts of the middle section 26
- 46: machined edge of the brake caliper 8
- 50: piston boot
- 52, 54: ends of the piston boot 50
- 56: middle section of the piston boot 50
- 58: folding elements
- 60: groove of the second end 54
- 62: lip
- 64: opening of the second end 54
- 66: opening of the first end 52
- 68: groove of the first end 52
- 70: inner diameter of the first end 52
- 72: inner diameter of the second end 54
- 74: outer diameter of the middle section 56
- 80: central hole of the lip 62
- 82: diameter of the central hole 80
- 90: disc brake
- 92: brake actuator
- 94: push rod of the brake actuator 92
- 96: housing cover of the brake actuator 92
- 98: caliper of the disc brake 90
- 100: edge of the caliper 96
- 102: end of the lip 62
- 110: piston boot
- 112: lip of the piston boot 110
- 114: central hole of the lip 112
- 120: piston boot
- 122: lip of the piston boot 120
- 124: central hole of the lip 122
- 130: piston boot
- 132: lip of the piston boot 130
- 134: central hole of the lip 132
- 136: cuts
- 138: sections
- 140: piston boot
- 142: lip of the piston boot 140
- 144: reinforcement of the lip 142

## Claims

1. A piston boot (50, 110, 120, 130, 140) for a brake actuator (92) comprising a first end (52), a second end (54), and a compressible middle section (56), wherein the piston boot (50, 110, 120, 130, 140) has a form of a hollow, substantially cylindrical body, and wherein the second end (54) comprises an opening (64) and a groove (60) at its outer circumference for mounting the second end (54) at a housing cover (96) of the brake actuator (92), **characterized in that** the second end (54) comprises a lip (62, 112, 122, 132, 142) extending into the opening (64) of the second end (54).

2. The piston boot (50, 110, 120, 130, 140) of one of the preceding claims, wherein the lip (62, 112, 122, 132, 142) comprises a central hole (80, 114, 124, 134) having a diameter (82) that is smaller than an outer diameter (74) of the middle section (56).

3. The piston boot (50, 110, 120, 130, 140) of claim 2, wherein the central hole (80, 114, 124, 134) of the lip (62, 112, 122, 132, 142) has a circular shape (80), an elliptical shape (114), or a polygonal shape (124).

4. The piston boot (50, 110, 120, 130, 140) of one of the preceding claims, wherein the lip (62, 112, 122, 132, 142) comprises cuts (136) dividing the lip (62, 112, 122, 132, 142) in two or more sections (138).

5. The piston boot (50, 110, 120, 130, 140) of one of the preceding claims, wherein the lip (62, 112, 122, 132, 142) is manufactured from the same material as the piston boot.

6. The piston boot (50, 110, 120, 130, 140) of one of the preceding claims, wherein the lip (62, 112, 122, 132, 142) includes a reinforcement (144), for example a fabric layer moulded within the lip.

7. A brake actuator (92) comprising a piston boot (50, 110, 120, 130, 140) according to one of the preceding claims.

8. The brake actuator (92) of claim 7, comprising a push rod (94) having a section that is surrounded by the piston boot (50, 110, 120, 130, 140).

9. The brake actuator (1) of claim 7 or 8, wherein the brake actuator (92) is a brake chamber or a spring brake actuator.

10. A disc brake (2) comprising a caliper (98) and a brake actuator (92) according to one of the claims 7 to 9, wherein the lip (62, 112, 122, 132 142) has a size that is sufficient to separate the caliper (98) of the disc brake (90) from the middle section (56) of the piston boot (50, 110, 120, 130, 140) in case of a braking action of the brake actuator (92), wherein in the braking action a service brake spring of the brake actuator (92) is fully compressed.

11. The disc brake (2) according to claim 10, wherein the lip (62, 112, 122, 132, 142) has a size being sufficient to prevent a contact between the middle section (56) and an edge (100) of the caliper (98) during the braking action, in which the service brake spring is fully compressed.

12. The disc brake (2) according to claim 10 or 11, wherein an end (102) of the lip (62, 112, 122, 132, 142) covers an edge (100) of the caliper (98) during the braking action, in which the service brake spring is fully compressed.

## Patentansprüche

1. Kolbenmanschette (50, 110, 120, 130, 140) für einen Bremszylinder (92), umfassend ein erstes Ende (52), ein zweites Ende (54) und einen zusammendrückbaren Mittelabschnitt (56), wobei die Kolbenmanschette (50, 110, 120, 130, 140) eine Form eines hohlen, im Wesentlichen zylindrischen Körpers aufweist und wobei das zweite Ende (54) eine Öffnung (64) und eine Nut (60) an seinem Außenumfang zum Befestigen des zweiten Endes (54) an einer Gehäuseabdeckung (96) des Bremszylinders (92) umfasst,
**dadurch gekennzeichnet, dass** das zweite Ende (54) eine Lippe (62, 112, 122, 132, 142) umfasst, die sich in die Öffnung (64) des zweiten Endes (54) erstreckt.

2. Kolbenmanschette (50, 110, 120, 130, 140) nach einem der vorstehenden Ansprüche, wobei die Lippe (62, 112, 122, 132, 142) ein zentrales Loch (80, 114, 124, 134) umfasst, das einen Durchmesser (82) aufweist, der kleiner als ein Außendurchmesser (74) des Mittelabschnitts (56) ist.

3. Kolbenmanschette (50, 110, 120, 130, 140) nach Anspruch 2, wobei das zentrale Loch (80, 114, 124, 134) der Lippe (62, 112, 122, 132, 142) eine kreisförmige Gestalt (80), eine elliptische Gestalt (114) oder eine polygonale Gestalt (124) aufweist.

4. Kolbenmanschette (50, 110, 120, 130, 140) nach einem der vorstehenden Ansprüche, wobei die Lippe (62, 112, 122, 132, 142) Einschnitte (136) umfasst, die die Lippe (62, 112, 122, 132, 142) in zwei oder mehr Abschnitte (138) unterteilen.

5. Kolbenmanschette (50, 110, 120, 130, 140) nach einem der vorstehenden Ansprüche, wobei die Lippe (62, 112, 122, 132, 142) aus dem gleichen Material wie die Kolbenmanschette hergestellt ist.

6. Kolbenmanschette (50, 110, 120, 130, 140) nach einem der vorstehenden Ansprüche, wobei die Lippe (62, 112, 122, 132, 142) eine Verstärkung (144) einschließt, beispielsweise eine innerhalb der Lippe eingeformte Gewebeschicht.

7. Bremszylinder (92), umfassend eine Kolbenmanschette (50, 110, 120, 130, 140) nach einem der vorstehenden Ansprüche.

8. Bremszylinder (92) nach Anspruch 7, umfassend eine Druckstange (94), die einen Abschnitt aufweist, der von der Kolbenmanschette (50, 110, 120, 130, 140) umgeben ist.

9. Bremszylinder (1) nach Anspruch 7 oder 8, wobei der Bremszylinder (92) eine Bremskammer oder ein Federspeicherbremszylinder ist.

10. Scheibenbremse (2), umfassend einen Sattel (98) und einen Bremszylinder (92) nach einem der Ansprüche 7 bis 9, wobei die Lippe (62, 112, 122, 132, 142) eine Größe aufweist, die ausreichend ist, um im Falle eines Bremsvorgangs des Bremszylinders (92) den Sattel (98) der Scheibenbremse (90) von dem Mittelabschnitt (56) der Kolbenmanschette (50, 110, 120, 130, 140) zu trennen, wobei eine Betriebsbremsfeder des Bremszylinders (92) bei dem Bremsvorgang vollständig zusammengedrückt wird.

11. Scheibenbremse (2) nach Anspruch 10, wobei die Lippe (62, 112, 122, 132, 142) eine Größe aufweist, die ausreichend ist, um während des Bremsvorgangs, bei dem die Betriebsbremsfeder vollständig zusammengedrückt wird, einen Kontakt zwischen dem Mittelabschnitt (56) und einer Kante (100) des Sattels (98) zu verhindern.

12. Scheibenbremse (2) nach Anspruch 10 oder 11, wobei ein Ende (102) der Lippe (62, 112, 122, 132, 142) während des Bremsvorgangs, bei dem die Betriebsbremsfeder vollständig zusammengedrückt wird, eine Kante (100) des Sattels (98) abdeckt.

## Revendications

1. Gaine de piston (50, 110, 120, 130, 140) pour un actionneur de frein (92) comprenant une première extrémité (52), une seconde extrémité (54) et une section centrale compressible (56), dans laquelle la gaine de piston (50, 110, 120, 130, 140) a la forme d'un corps creux, sensiblement cylindrique, et dans laquelle la seconde extrémité (54) comprend une ouverture (64) et une rainure (60) à sa circonférence extérieure pour le montage de la seconde extrémité (54) sur un couvercle de boîtier (96) de l'actionneur de frein (92), **caractérisée en ce que** la seconde extrémité (54) comprend une lèvre (62, 112, 122, 132, 142) s'étendant dans l'ouverture (64) de la seconde extrémité (54).

2. Gaine de piston (50, 110, 120, 130, 140) selon l'une des revendications précédentes, dans laquelle la lèvre (62, 112, 122, 132, 142) comprend un trou central (80, 114, 124, 134) ayant un diamètre (82) qui est inférieur à un diamètre extérieur (74) de la section centrale (56).

3. Gaine de piston (50, 110, 120, 130, 140) selon la revendication 2, dans laquelle le trou central (80, 114, 124, 134) de la lèvre (62, 112, 122, 132, 142) a une forme circulaire (80), une forme elliptique (114), ou une forme polygonale (124).

4. Gaine de piston (50, 110, 120, 130, 140) selon l'une des revendications précédentes, dans laquelle la lèvre (62, 112, 122, 132, 142) comprend des entailles (136) divisant la lèvre (62, 112, 122, 132, 142) en deux ou plusieurs sections (138).

5. Gaine de piston (50, 110, 120, 130, 140) selon l'une des revendications précédentes, dans laquelle la lèvre (62, 112, 122, 132, 142) est fabriquée à partir du même matériau que la gaine de piston.

6. Gaine de piston (50, 110, 120, 130, 140) selon l'une des revendications précédentes, dans laquelle la lèvre (62, 112, 122, 132, 142) comprend un renfort (144), par exemple une couche de tissu moulée à l'intérieur de la lèvre.

7. Actionneur de frein (92) comprenant une gaine de piston (50, 110, 120, 130, 140) selon l'une des revendications précédentes.

8. Actionneur de frein (92) selon la revendication 7, comprenant une tige de poussée (94) ayant une section qui est entourée par la gaine du piston (50, 110, 120, 130, 140).

9. Actionneur de frein (1) selon la revendication 7 ou 8, dans lequel l'actionneur de frein (92) est une chambre de frein ou un actionneur de frein à ressort.

10. Frein à disque (2) comprenant un étrier (98) et un actionneur de frein (92) selon l'une des revendications 7 à 9, dans lequel la lèvre (62, 112, 122, 132, 142) a une taille suffisante pour séparer l'étrier (98) du frein à disque (90) de la section centrale (56) de la gaine de piston (50, 110, 120, 130, 140) en cas d'action de freinage de l'actionneur de frein (92), dans lequel, lors de l'action de freinage, un ressort de frein de service de l'actionneur de frein (92) est entièrement comprimé.

11. Frein à disque (2) selon la revendication 10, dans lequel la lèvre (62, 112, 122, 132, 142) a une taille suffisante pour empêcher un contact entre la section centrale (56) et un bord (100) de l'étrier (98) pendant l'action de freinage, lorsque le ressort du frein de service est complètement comprimé.

12. Frein à disque (2) selon la revendication 10 ou 11, dans lequel une extrémité (102) de la lèvre (62, 112, 122, 132, 142) recouvre un bord (100) de l'étrier (98) pendant l'action de freinage, lorsque le ressort du frein de service est complètement comprimé.
